# EUROPEAN PATENT SPECIFICATION

(11) **EP 3 246 698 B1**
(45) Date of publication and mention of the grant of the patent: **08.05.2019**
(21) Application number: 16170211.3
(22) Date of filing: 18.05.2016
(51) Int. Cl.: G01N 27/327

(54) **ELECTROCHEMICAL BIOSENSORS**
ELEKTROCHEMISCHE BIOSENSOREN
BIOCAPTEURS ÉLECTROCHIMIQUES

(43) Date of publication of application: 22.11.2017
(73) Proprietor: Elisha Systems Limited, Cheshire SK10 2XR (GB)
(72) Inventor: GIBSON, Dr. Timothy David, Wakefield West Yorkshire WF3 4AA (GB); SHARP, Duncan William MacKenzie, Althorpe North Lincolnshire DN17 3HZ (GB)
(74) Representative: Browne, Robin Forsythe

(56) References cited:
- LAM DAI TRAN ET AL: "A polytyramine film for covalent immobilization of oligonucleotides and hybridization", SYNTHETIC METALS, vol. 139, no. 2, 1 September 2003 (2003-09-01), pages 251-262, XP055312763, CH ISSN: 0379-6779, DOI: 10.1016/S0379-6779(03)00131-0
- XIAO ET AL: "Surface reactions of 4-aminothiophenol with heterobifunctional crosslinkers bearing both succinimidyl ester and maleimide for biomolecular immobilization", ANALYTICAL SCIENCES, THE JAPAN SOCIETY FOR ANALYTICAL CHEMISTRY, US, vol. 290, no. 1, 1 October 2005 (2005-10-01), pages 172-183, XP005037380, ISSN: 0021-9797
- SHOU-JUN XIAO ET AL: "Reactions of Surface Amines with Heterobifunctional Cross-Linkers Bearing Both Succinimidyl Ester and Maleimide for Grafting Biomolecules", JOURNAL OF PHYSICAL CHEMISTRY PART B: CONDENSED MATTER, MATERIALS, SURFACES, INTERFACES & BIOPHYSICAL, vol. 108, no. 42, 1 October 2004 (2004-10-01), pages 16508-16517, XP055312714, US ISSN: 1520-6106, DOI: 10.1021/jp047726s
- E.V. SUPRUN ET AL: "Bi-enzyme sensor based on thick-film carbon electrode modified with electropolymerized tyramine", BIOELECTROCHEMISTRY, vol. 63, no. 1-2, 1 June 2004 (2004-06-01) , pages 281-284, XP055312968, NL ISSN: 1567-5394, DOI: 10.1016/j.bioelechem.2003.10.025

## Description

This invention relates to electrochemical biosensors and methods and components for manufacture of the biosensors, particularly but not exclusively to biosensors including affinity proteins including affimers, adhirons, darpins, antibodies and peptide aptamers and other affinity reagents such as DNA and RNA aptamers (referred to for brevity in the specification as "affinity reagents"). The invention also relates to methods of making biosensors and components thereof.

Tyramine, tyramine derivatives and tyramine analogues have been used to improve sensitivity of diagnostic assay or immunohistochemistry systems and to produce reagents that enhance sensitivity or generate functional hydrogels. An example is the use of an enzymically enhanced immunoassay where a peroxidase system is used to react the phenolic side chains of the tyrosines with biotinylated-tyramine on bound protein target analyte surfaces, thus producing a network of biotin groups to anchor avidin labels e.g. streptavidin-peroxidase and so amplifying the signal produced.

The synthesis of biotinylated-tyramine has been disclosed (Biotin Amplification of Biotis and Horseradish Peroxidase Signals in Histochemical Stains' - Joe C Adams - The Journal of Histochemistry and Cytochemistry Vo. 40 No. 10, pp. 1457-1463.1992*).*

Tyramine and other molecularly similar structures or analogues such as octopamine can be reacted in solution with amino-reactive chemical groups such as succinamidyl functional reagents, e.g. N-(α-maleimidoacetoxy) succinamide ester, to form maleimide functional tyramide or octopamide esters. These esters may be chemically bifunctional esters. Many maleimide heterobifunctional protein and peptide crosslinking agents are available. Using these it is possible to form maleimide functional tyramide or octopamide esters. In addition other heterobifunctional reagents are available, enabling other chemical functional groups to be formed as tyramide or octopamide esters, including pyridyldithiol, thiol, halo-acetyl, aryl azide, diazirine and psoralen functionalities.

Polytyramine sensors have been made by a sequence comprising the steps of:
1) electropolymerisation of tyramine on an electrode surface;
2) reaction of the polytyramine film with a crosslinking agent such as sulpho-SMCC sodium salt; and
3) the SMCC activated surface is reacted with a cysteine containing affimer to produce a biosensor. In this format the polymer layer is formed first followed by immobilisation of the affimer. However the performance of such biosensors has been found to be inconsistent.

Suprun E.V. et al, Bi-enzyme sensor based on thick-film carbon electrode modified with electropolymerized tyramine, Bioelectrochemistry 63 (2004) 281-284 discloses an enzymatic sensor comprising an electrode covered by a polytyramine matrix. The enzymes are immobilised to the matrix by glutaraldehyde.

Self-assembled monolayers of affimers can be made using noble metal substrates. However, a difficulty is that the electrode surface, usually gold or platinum, should be molecularly flat in order to afford a suitable self-assembled layer. This makes such a sensor uneconomical and impedes widespread commercial application.

According to a first aspect of the present invention, a method of making an electrochemical sensor with a functionalised electrode surface according to claim 1 is provided.

The present invention provides a convenient and effective method by which an affinity reagent may be immobilised upon a functionalised electrode surface to form an electrochemical sensor. The affinity reagent may be selected from the group consisting of: conserved scaffold affinity proteins including affimers, adhirons, darpins, and other peptide aptamers. In addition whole antibodies and antibody fragments e.g. Fab, F(ab)2 and Fv fragments including engineered antibody fragments such as nanobodies may be used instead of conserved scaffold affinity proteins.

The present inventors have discovered that hetrobifunctional reagents containing a succinamidyl group, or N-hydroxysuccinamide group react readily in solution with the primary amine groups of aminoalkylphenols under mildly alkaline conditions to form soluble bifunctional conjugates. Furthermore, bifunctional aminoalkylphenol conjugates may be electrochemically polymerised to give thin adherent films on electroactive surfaces, such as gold or carbon electrodes, providing active functional groups which allow proteins or peptides to be covalent bonded adjacent the polymer surface.

Biosensors of the present invention may be used in impedimetric analyses, including AC resistance, capacitance and measurement of phase angle at various frequencies; voltametric, resistometric and amperometric analyses.

The aminoalkylphenol may be a 4-substituted aminoalkylphenol, preferably 4-(2-aminoethyl) phenol or α-(aminomethyl)-4-hydroxybenzyl alcohol. Particularly suitable compounds may be selected from the group consisting of: 4-(2-aminoethyl) phenol [i.e. tyramine], α-(aminomethyl)-4-hydroxybenzyl alcohol [i.e. octopamine] and (±)-4-(2-amino-1-hydroxyethyl)-1,2-benzenediol [i.e. norepinephrine] and substituted derivatives thereof.

Preferred aminoalkyl phenols are stable under reaction conditions encountered in forming the conjugate and particularly do not self-polymerise under alkaline conditions. 4-(2-Aminoethyl)-1,2-benzenediol [i.e. dopamine] is not preferred for this reason.

Preferred crosslinking agents are bifunctional succinimidyl esters having functionality selected from the group consisting of: maleimide, pyridyldithiol, thiol, halo-acetyl, aryl azide, diazirine and psoralen functionalities. Maleimide functionality is particularly advantageous. Examples of suitable cross-linking agents are succinamidyl/maleimide reagents including N-[α-maleimidoacetoxy] succinimide ester or AMAS; succinimidyl 4-[N-maleimidomethyl]cyclohexane-1-carboxylate or SMCC; sulfosuccinimidyl 4-[N-maleimidomethyl]cyclohexane-1-carboxylate or sulfo-SMCC; m-maleimidobenzoyl-N-hydoxysuccinimide ester or MBS: m-maleimidobenzoyl-N-hydoxysuccinimide ester or sulfo-MBS; succinimidyl 4-[p-maleimidophenyl]butyrate or SMPB; sulfosuccinimidyl 4-[p-maleimidophenyl]butyrate or sulfo-SMPB; Succinimidyl-6-[(β-maleimidopropion amido) hexanoate or SMPH; N-[ε-maleimidocaproyloxy] succinimide ester or EMCS; N-[ε-maleimidocaproyloxy]sulfosuccinimide ester or sulfo-EMCS; N-[β-maleimido propyloxy] succinimide ester or BMPS; N-[y-maleimidobutyryloxy] succinimide ester or GMBS; N-[y-maleimidobutyryloxy]sulfosuccinimide ester or sulfo-GMBS; Succinimidyl 6-((β-maleimidopropionamido)hexanoate) or SMPH; succinimidyl 4-(N-maleimido methyl)cyclohexane-1-carboxy-(6-amidocaproate) or LC-SMCC; N-κ-maleimido undecanoyl-oxysulfosuccinimide ester or sulfo-KMUS and succinimidyl PEGylated maleimido crosslinkers, e.g. PEGylated SMCC, where the polyethylene glycol chain may have a length of 2 to 24 glycol units.

According to a second aspect of the present invention, an affinity reagent conjugate for manufacture of an electrochemical sensor in accordance with the first aspect of this invention comprises a conjugate formed by reaction of an affinity reagent e.g. peptide aptamer, affimer, adhiron or antibody fragment with a reaction product of a aminoalkylphenol with a crosslinking agent as disclosed above.

Use of molecularly flat gold or platinum electrodes is not necessary for carrying out the method of the present invention.

Electrodes which may be employed include screen printed electrodes or electrodes having thick films, for example, with a thickness of 1-100 µm. Porous electrodes may be employed. The electrodes may include carbon electrodes or electrodes comprising the metals: gold, platinum, aluminium, titanium, nickel or stainless steel. Copper or silver electrodes are not preferred.

A biosensor in accordance with the present invention may be made simply by a process which is capable of automation.

According to a third aspect of the present invention, a method of manufacture of an electrochemical biosensor comprises the successive steps of:
providing an affinity reagent conjugate in accordance with the second aspect of the present invention;
providing an electrode; and
electropolymerising the affinity reagent conjugate onto the electrode surface.

Affimers, adhirons, darpins and other peptide aptamers can be described as conserved scaffold based affinity proteins. Preferred embodiments of the present invention provide a method of manufacture of biosensors which comprise conserved scaffold based affinity proteins. The affinity reagent conjugate of this invention is preferably a conjugate comprising an aminoalkyl phenol, a heterobifunctional cross-linking agent and a conserved scaffold based affinity protein.

In a preferred method, aminoalkyl phenol such as α-(aminomethyl)-4-hydroxybenzyl alcohol [short name = octopamine] is dissolved in a water miscible solvent, for example, dimethylsulphoxide, dimethylformamide or ethanol, together with a phosphate buffer (100 mM) at pH 7.5 to 7.9. In a separate solution the crosslinker is dissolved in the same solvent and the same buffer (100 mM phosphate buffer, pH 7.5 to 7.9) is added to provide equimolar amine and crosslinker solutions.

The two solutions are mixed in equimolar amounts.

In a particularly advantageous method, a slight excess of the aminoalkyl phenol is employed, preferably a 1.05 to 1.2 molar excess. This has been found to enhance the polymerisation deposition reaction, providing improved binding of the polymer to the electrode.

The solutions are incubated at ambient temperature with shaking at one hour to form the aminoalkyl phenol-crosslinker conjugate, typically a tyramide-maleimide or octopamide-maleimide conjugate.

The aminoalkyl phenol-crosslinker conjugate solution is then mixed with an equal volume of affimer solution (200 µg/ml) in a pH 7.1, 100mM phosphate buffer. The pH of the conjugate/affimer mixture is preferably pH 7.3. The mixture is gently agitated at room temperature for one hour to produce the affinity reagent conjugate and is then ready for use.

The affinity reagent conjugate may be stored at 4°C for several weeks.

A dual screen printed electrode may be employed. In an exemplary process the electrode is mounted flat with the electroactive surface upwards and 15-25 µl of the affinity reagent conjugate solution is applied to the first working electrode (WE1), counter electrode and reference electrode taking care that the second working electrode (WE2) is not covered. Two cyclic voltammetric (CV) scans are run from 0 volts to +1.6 volts at a scan rate of 100 mV/sec. In the first two CV scans a non-specific affinity reagent conjugate is applied to the first working electrode (WE1), following which the electrode is cleaned using phosphate buffered saline (PBS) and gently blotted dry. The specific affinity reagent conjugate is then applied to the second working electrode (WE2), counter electrode and reference electrode taking care that the first working electrode (WE1) is not covered. The second two CV scans are run to polymerise the specific affimer onto the second electrode using the same conditions as before. Only the working electrodes are coated due to the polarity of the applied current.

The biosensor is then washed using PBS and is ready for use.

The present invention confers numerous advantages. The whole reagent may be made in a one pot process, avoiding the need to add multiple reagents to a polymer coated electrode. Only a single application step to the electrode is required. This affords a high degree of consistency in manufacture of biosensors.

The invention is further described by means of example, but not in any limitative sense with reference to the accompanying drawings, of which:

### Example 1 - LOX 1 Biosensors

### Preparation of LOX 1 Conjugates

Lectin-like oxidized low-density lipoprotein receptor 1 (LOX1) has been implicated as a putative cardiovascular disease biomarker, indicating the status of artheroscolrosis.

The following procedure was used:-
Solution 1) Octopamine (3.8mg) was dissolved in 20%v/v DMSO in 100mM phosphate buffer pH 7.5 to give a 20mM solution.
Solution 2) SMCC (5.3mg) was dissolved in 160µl DMSO and then 440µl 100mM phosphate buffer pH 7.5 was added to give a 20mM solution.

Solution1 was added to solution 2, mixed well and incubated for 1 hour at 20°C - 22°C (room temperature) using an end over end stirrer.

The resulting octopamide - crosslinker conjugate containing maleimide groups was then subdivided into two 300µl aliquots. The first was added to an equal volume of a solution of cysteine containing LOX1 adhiron at 200µg per ml, to give a final concentration of 100µg per ml adhiron.

The second aliquot was added to cysteine containing non-specific adhiron for LOX (e.g. SUMO or PDL-1) at 200µg per ml, to give a final concentration of 100µg per ml adhiron.

These mixtures were incubated at room temperature for 1 hour with occasional gentle stirring.

The resulting octopamide linked adhirons were then either used immediately or stored at 4°C before use.

### Deposition Method

The following procedure was used:-
Single Electrode Connector: Insert an electrode in the connector horizontally facing up - check all connections are functioning correctly.
Multi-Electrode Connector: Insert required number of electrodes in multi connector horizontally facing up - check all connectors are functioning correctly.

Ensure working electrode 1 (WE1) is connected.

Using a Gilson P200 carefully pipette 20-25 µl of solution 1 onto WEI/Reference/counter (all 3 electrodes must be covered).

Deposit the non-specific octopamide conjugate (e.g. PDL-1) using a potentiostat set for 2 scans from 0 volts to +1.6 volts and back at 100mV/sec and stop. Remove solution off electrodes using pipette and rinse well 100mM PBS pH 7.1-7.2, carefully blot dry and replace in connector.

Ensure the electrode pins are dry.

Swap the connector to working electrode 2 (WE2).

Using a Gilson P200 carefully pipette 20-25 µl of solution 2 onto WE2/Reference/counter (all 3 electrodes must be covered).

Deposit the (LOXI) specific octopamide conjugate using a potentiostat set for 2 scans from 0 volts to 1.6 volts and back at 100mV/sec and stop. Remove solution off electrodes using pipette and rinse well 100mM PBS pH 7.1-7.2 and then leave soaking in PBS solution

The biosensors were then ready for testing.

### AC Impedance Testing

The following procedure was used:-
1. Add 30µl of a zero control sample (comprises 100mM sodium phosphate buffer pH7.1 + 0.9%w/v NaCl + 2.5 µg/ml BSA - designated PBS/BSA) to the sample area of the biosensor produced above and incubate for 5 minutes.
2. Rinse in PBS (wash bottle) and rinse in a 10ml beaker of measuring buffer (PBS + 10mM potassium ferricyanide + 10mM potassium ferrocyanide).
3. Carefully grip the top (white) part of the biosensor, invert, ensure connectors are dry using tissue and plug into the connector making sure that sensor is centrally located and pushed fully home.
4. Immerse the biosensor in a 10ml beaker of measuring buffer so that all electrodes are covered but the connector is well above the surface of measuring buffer. The connector must not be allowed to get wet.
5. Ensure that WE1 is connected to the impedance analyser
6. Run the experiment (1000Hz to 1Hz) and save the results using a unique file name.
7. Ensure that WE2 is connected to the impedance analyser
8. Run the experiment (1000Hz to 1Hz) and save the results using a unique file name.
9. Run a second scan by repeating steps 6-10.
10. Rinse in PBS and gently blot dry with lab tissue.

Add analyte:
11. Add 30µl of analyte (if measuring a positive control note the concentration) and iIncubate for 5 minutes.
12. Repeat steps 3-10 above (this generates 2 new unique files for analyte on WE1 & WE2).
13. There is no need to run a second scan after incubation with sample.

Points 1-13 are the full procedure for measuring and collecting data from one sample.

The results were as follows.

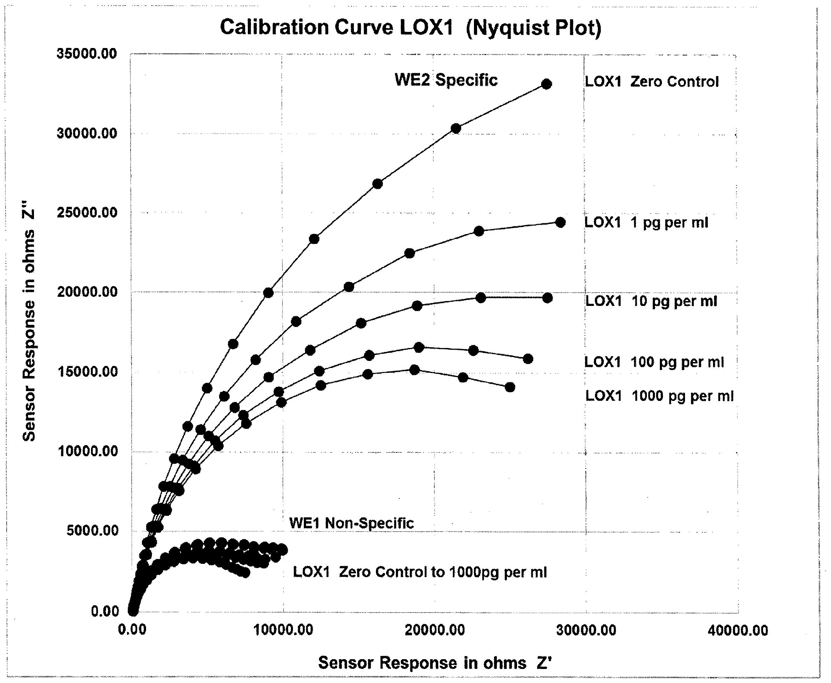

The raw data files displayed as a Nyquist plot are shown in Figure 1.

It may be seen that the WE1 non-specific electrode did not change significantly when adding different concentrations of LOX1. The specific electrode (WE2) showed a large change as the concentration of LOX1 changed.

Taking this data as a series of responses in the total impedance at a frequency of 1Hz (the last data point), the following results were obtained using two duplicate biosensors 1 and 2:

| | **Biosensor 1** | | | **Biosensor 2** | | |
|---|---|---|---|---|---|---|
| **LOX1 Concentration picograms per ml** | **WE1 Non-specific** | **WE2 Specific** | **Difference** | **WE1 Non-specific** | **WE2 Specific** | **Difference** |
| 0 | 7860 | 43100 | 35240 | 10300 | 41500 | 31200 |
| 1 | 10600 | 37500 | 26900 | 8630 | 41000 | 32370 |
| 10 | 9230 | 33800 | 24570 | 10600 | 36400 | 25800 |
| 100 | 10700 | 30600 | 19900 | 10700 | 30300 | 19600 |
| 1000 | 10100 | 28700 | 18600 | 10500 | 29300 | 18800 |

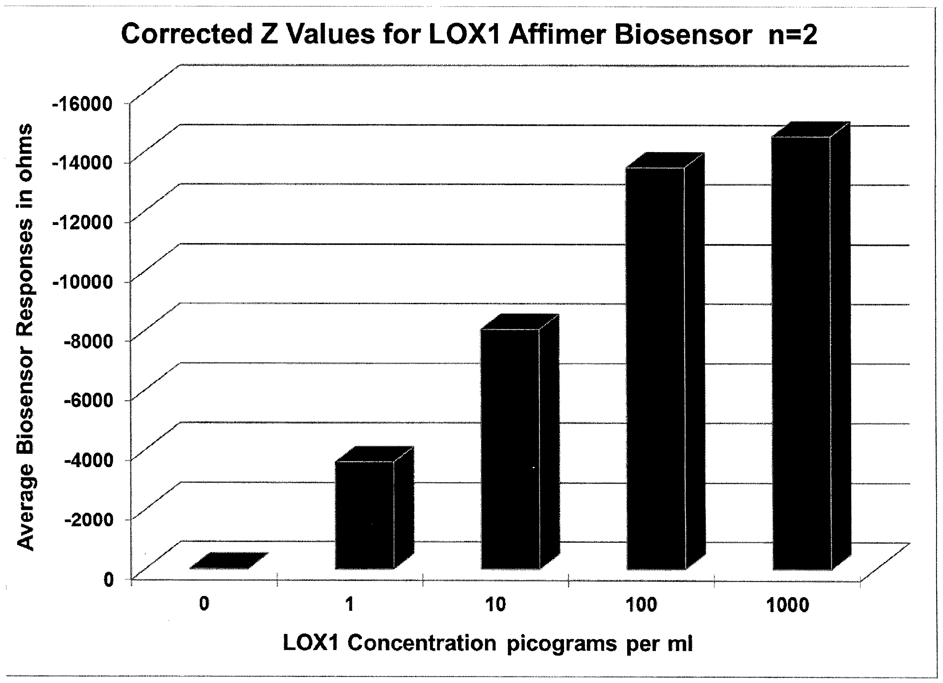

Averaging the difference results and correcting by subtraction of the zero control gives the results shown plotted graphically in Figure 2:
Example 2 - Atrial Natriuretic Peptide (ANP) Biosensor

Atrial natriuretic peptide is a peptide hormone that regulates vasodilation and it has been reported as a good cardiac biomarker

The affimers produced against this peptide have been immobilised in an identical fashion to the LOX1 adhiron.

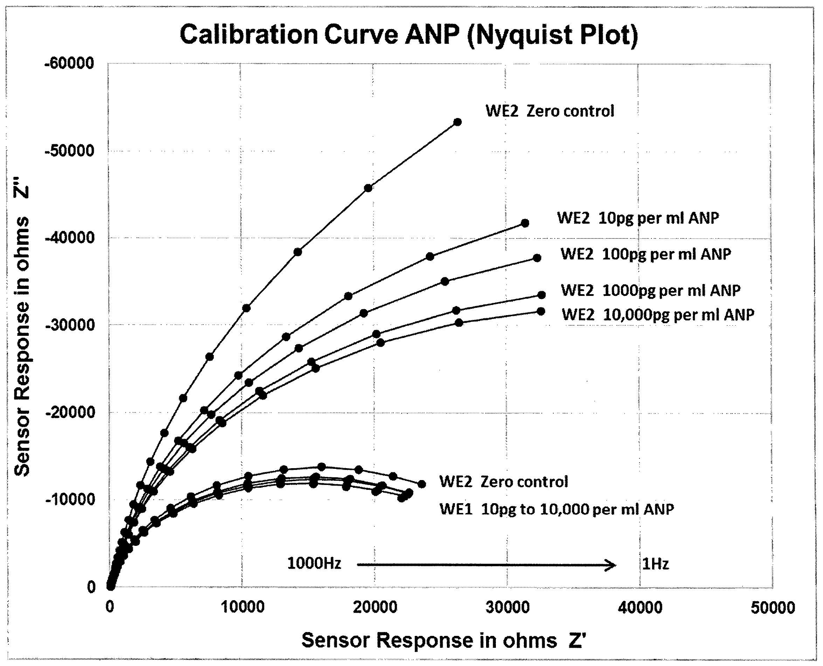

The raw data plotted as Nyquist plots is shown in Figure 3.

The data in the calibration curve is tabulated below.

| **Picograms per ml ANP** | **WE1** | **WE2** | **Difference** | | **Corrected** |
|---|---|---|---|---|---|
| 0.00 | 26354.38 | 59509.54 | 33155.16 | | 0.00 |
| 10.00 | 24979.56 | 52300.49 | 27320.92 | | -5834.24 |
| 100.00 | 25067.23 | 49698.08 | 24630.86 | | -8524.30 |
| 1000.00 | 24292.19 | 46768.11 | 22475.92 | | -10679.24 |
| 10000.00 | 24614.08 | 45452.09 | 20838.02 | | -12317.14 |

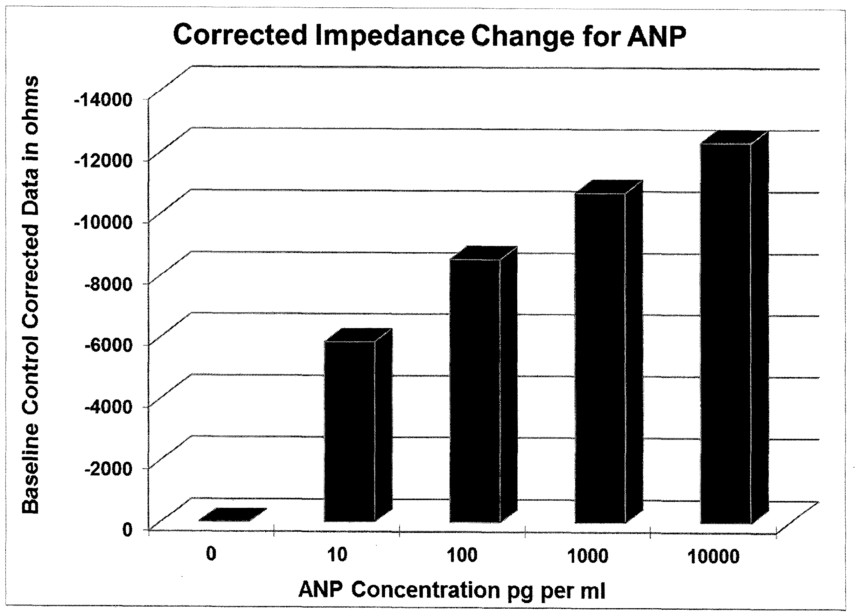

Plotting the corrected values graphically gives the plot shown in Figure 4.

### Example 3 - Fibroblast Growth Factor Receptor 3 (FGFR3) Biosensor

Fibroblast Growth Factor Receptor 3 (FGFR3) has been implicated as a potential biomarker for bladder cancers.

The adhirons produced against this protein have been immobilised in an identical fashion to the LOX1 adhiron.

The raw data from WE1 (the non-specific control electrode) and WE2 (the specific electrode) plus the differences are tabulated below.

| Molarity | Picograms / ml | WE1 | WE2 | Difference | | Corrected |
|---|---|---|---|---|---|---|
| | Zero Control | 220065.28 | 281637.51 | 61572.24 | | 0.00 |
| 0.1pM | 4.98pg per ml | 181375.16 | 230930.11 | 49554.95 | | -12017.28 |
| 1.0pM | 49.8pg per ml | 169224.20 | 198234.46 | 29010.26 | | -32561.97 |
| 10.0pM | 498pg per ml | 151142.86 | 174911.27 | 23768.41 | | -37803.82 |

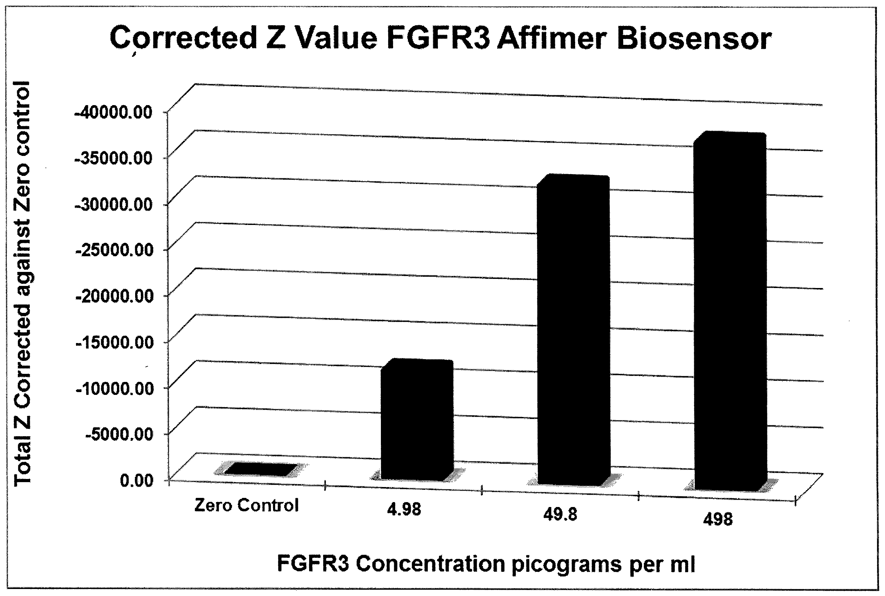

Plotting the corrected values graphically gives the plot shown in Figure 5.

## Claims

1. A method of making an electrochemical sensor with a functionalised electrode surface comprising the steps of reacting an aminoalkyl phenol with a heterobifunctional cross-linking agent to form a soluble bifunctional aminoalkylphenol conjugate having dual polymerisable functionality and chemical reactive functionality;
reacting the bifunctional aminoalkylphenol conjugate in solution with a soluble affinity reagent to form an affinity reagent conjugate;
applying the affinity reagent conjugate to an electrode surface; and
polymerising the affinity reagent conjugate on the surface to form a functionalised electrode surface.

2. A method as claimed in claim 1, wherein the aminoalkyl phenol is a 4-substituted aminoalkylphenol.

3. A method as claimed in claim 2, wherein the aminoalkylphenol is 4-(aminoethyl)phenol.

4. A method as claimed in claim 1, wherein the aminoalkyl phenol is selected from the group consisting of: 4-(2-aminoethyl) phenol, α-(aminomethyl)-4-hydroxybenzyl alcohol and (±)-4-(2-amino-1-hydroxyethyl)-1,2-benzenediol and substituted derivatives thereof.

5. A method as claimed in claim 1, wherein the polymerisation of the affinity reagent conjugate is performed by electropolymerisation.

6. A method as claimed in any preceding claim, wherein the cross linking agent is a heterobifunctional succinamidyl ester.

7. A method as claimed in claim 6, wherein the cross linking agent is selected from the group consisting of: N-[α-maleimidoacetoxy]succinimide ester; succinimidyl 4-[N-maleimidomethyl]cyclohexane-1-carboxylate; sulfosuccinimidyl4-[N-aleimidomethyl] cyclohexane-1-carboxylate; m-maleimidobenzoyl-N-hydoxysuccinimide ester: m-maleimido benzoyl-N-hydoxysuccinimide ester; succinimidyl 4-[p-maleimidophenyl] butyrate; sulfosuccinimidyl 4-[p-maleimidophenyl]butyrate; succinimidyl-6-[(β-maleimidopropion amido) hexanoate; N-[ε-maleimido caproyloxy]succinimide ester; N-[ε-maleimidocaproyloxy]sulfosuccinimide ester; N-[β-maleimido propyloxy] succinimide ester; N-[y-maleimidobutyryloxy] succinimide ester; N-[y-maleimidobutyryloxy] sulfosuccinimide ester; Succinimidyl 6-((β-maleimido propionamido)hexanoate); succinimidyl 4-(N-maleimido methyl)cyclohexane-1-carboxy-(6-amidocaproate); N-κ-maleimido undecanoyl-oxysulfo succinimide ester and succinimidyl PEGylated maleimido crosslinkers, e.g. PEGylated SMCC, where the polyethylene glycol chain may have a length of 2 to 24 glycol units.

8. A method as claimed in any preceding claim, wherein the electrode is a screen printed or thick film electrode

9. A method as claimed in claim 8, wherein the electrode is a carbon electrode.

10. A method as claimed in claim 8, wherein the electrode is a gold, platinum, aluminium, titanium, nickel or stainless steel electrode.

11. An affinity reagent conjugate for manufacture of an electrochemical sensor comprising a conjugate formed by reaction of an affinity reagent with a reaction product of an aminoalkyl phenol with a cross linking agent wherein the aminoalkyl phenol and the cross linking agent are as disclosed in any preceding claim.

12. A method of manufacture of an electrochemical biosensor comprising the successive steps of:
providing an affinity reagent conjugate in accordance with claim 11;
providing an electrode; and
electropolymerising the affinity reagent conjugate onto the electrode surface.

## Patentansprüche

1. Verfahren zur Herstellung eines elektrochemischen Sensors mit einer funktionalisierten Elektrodenoberfläche, umfassend die Schritte:
chemisches Umsetzen eines Aminoalkylphenols mit einem heterobifunktionellen Vernetzungsmittel, um ein lösliches bifunktionelles Aminoalkylphenol-Konjugat mit dual polymerisierbarer Funktionalität und chemischer reaktiver Funktionalität zu bilden; chemisches Umsetzen des bifunktionellen Aminoalkylphenol-Konjugats in Lösung mit einem löslichen Affinitätsreagens, um ein Affinitätsreagens-Konjugat zu bilden; Aufbringen des Affinitätsreagens-Konjugats auf eine Elektrodenoberfläche; und
Polymerisieren des Affinitätsreagens-Konjugats auf der Oberfläche, um eine funktionalisierte Elektrodenoberfläche zu bilden.

2. Verfahren nach Anspruch 1, wobei das Aminoalkylphenol ein 4-substituiertes Aminoalkylphenol ist.

3. Verfahren nach Anspruch 2, wobei das Aminoalkylphenol ein 4-(Aminoethyl)phenol ist.

4. Verfahren nach Anspruch 1, wobei das Aminoalkylphenol ausgewählt ist aus der Gruppe bestehend aus: 4-(2-Aminoethyl)phenol, α-(Aminomethyl)-4-Hydroxybenzylalkohol und (±)-4-(2-Amino-1-Hydroxyethyl)-1, 2-Benzoldiol und substituierte Derivate davon.

5. Verfahren nach Anspruch 1, wobei die Polymerisation des Affinitätsreagens-Konjugats mittels Elektropolymerisation durchgeführt wird.

6. Verfahren nach einem der vorhergehenden Ansprüche, wobei das Vernetzungsmittel ein heterobifunktioneller Succinamidylester ist.

7. Verfahren nach Anspruch 6, wobei das Vernetzungsmittel ausgewählt ist aus der Gruppe bestehend aus: N-[a-Maleimidoacetoxy]-Succinimidester; Succinimidyl-4-[N-Maleimidomethyl]-Cyclohexan-1-Carboxylat; Sulfosuccinimidyl-4-[N-Aleimidomethyl]-Cyclohexan-1-Carboxylat; m-Maleimidobenzoyl-N-Hydoxysuccinimidester: m-Maleimido-Benzoyl-N-Hydoxysuccinimidester; Succinimidyl-4-[p-Maleimidophenyl]-butyrat; Sulfosuccinimidyl-4-[p-Maleimidophenyl]-Butyrat; Succinimidyl-6-[(β-Maleimidopropion-Amido)]-Hexanoat; N-[ε-Maleimido-Caproyloxy]-Succinimidester; N-[ε-Maleimido-Caproyloxy]-Sulfosuccinimidester; N-[β-Maleimido-Propyloxy]-Succinimidester; N-[γ-Maleimido-Butyryloxy]-Succinimidester; N-[γ-Maleimido-Butyryloxy]-Sulfosuccinimidester; Succinimidyl-6-((β-Maleimido-Propionamido)-Hexanoat); Succinimidyl-4-(N-Maleimidomethyl)-Cyclohexan-1-Carboxy-(6-Amidocaproat); N-κ-Maleimido-Undecanoyl-Oxysulfo-Succinimidester und Succinimidyl-(pegylierte Maleimido)-Vernetzer, z.B. pegyliertes SMCC, wobei die Polyethylen-Glykol-Kette eine Länge von 2 bis 24 Glykol-Einheiten haben kann.

8. Verfahren nach einem der vorhergehenden Ansprüche, wobei die Elektrode eine Siebdruck- oder Dickfilm-Elektrode ist.

9. Verfahren nach Anspruch 8, wobei die Elektrode eine Kohlenstoff-Elektrode ist.

10. Verfahren nach Anspruch 8, wobei die Elektrode eine Elektrode aus Gold, Platin, Aluminium, Titan, Nickel oder Edelstahl ist.

11. Affinitätsreagens-Konjugat zur Herstellung eines elektrochemischen Sensors, der ein, durch chemische Umsetzung eines Affinitätsreagens mit einem Reaktionsprodukt eines Aminoalkylphenols mit einem Vernetzungsmittel gebildetes, Konjugat umfasst, wobei das Aminoalkylphenol und das Vernetzungsmittel, wie in einem der vorhergehenden Ansprüche offenbart, bestehen.

12. Verfahren zur Herstellung eines elektrochemischen Biosensors, umfassend die aufeinanderfolgenden Schritte:
Bereitstellen eines Affinitätsreagens-Konjugats nach Anspruch 11;
Bereitstellen einer Elektrode; und
Elektropolymerisieren des Affinitätsreagens-Konjugats auf der Elektrodenoberfläche.

## Revendications

1. Procédé de fabrication d'un capteur électrochimique présentant une surface d'électrode fonctionnalisée comprenant les étapes de :
réaction entre un phénol alkylaminé avec un agent de réticulation hétérobifonctionnel afin de former un conjugué soluble bifonctionnel d'aminoalkylphénol présentant une fonctionnalité double polymérisable et une fonctionnalité réactive chimique ;
réaction entre le conjugué bifonctionnelle d'aminoalkylphénol en solution avec un réactif d'affinité soluble afin de former un conjugué de réactif d'affinité ;
application du conjugué de réactif d'affinité à une surface d'électrode; et
polymérisation du conjugué de réactif d'affinité à la surface afin de former une surface d'électrode fonctionnalisée.

2. Procédé selon la revendication 1, selon lequel l'aminoalkylphénol est un aminoalkylphénol 4-substitué.

3. Procédé selon la revendication 2, selon lequel l'aminoalkylphénol est le 4-(aminoéthyl)phénol.

4. Procédé selon la revendication 1, selon lequel l'aminoalkylphénol est choisi dans le groupe consistant en : le 4-(2-aminoéthyl) phénol, l'α-(aminométhyl)-4-hydroxybenzyl alcool et le (±)-4-(2-amino-1-hydroxyéthyl)-1,2-benzènediol et des dérivés substitués de ceux-ci.

5. Procédé selon la revendication 1, selon lequel la polymérisation du conjugué de réactif d'affinité est effectuée par électropolymérisation.

6. Procédé selon l'une quelconque des revendications précédentes, selon lequel l'agent de réticulation est un ester hétérobifonctionnel de succinamide.

7. Procédé selon la revendication 6, selon lequel l'agent de réticulation est choisi dans le groupe consistant en: l'ester N-[α-maléimidoacétoxy]succinimide; le succinimidyl-4-[N-maléimidométhyl]cyclohexane-1-carboxylate; le sulfosuccinimidyl-4-[N-maléimidométhyl]cyclohexane-1-carboxylate; l'ester m-maléimidobenzoyl-N-hydoxysuccinimide; l'ester m-maléimido benzoyl-N-hydoxysuccinimide; le succinimidyl-4-[p-maléimidophényl] butyrate; le sulfosuccinimidyl-4-[p-maléimidophényl]butyrate; le succinimidyl-6-[(β-maléimidopropion amido) hexanoate; l'ester N-[ε-maléimido caproyloxy]succinimide; l'ester N-[ε-maléimidocaproyloxyjsulfosuccinimide; l'ester N-[β-maléimido propyloxy]succinimide; l'ester N-[y-maléimidobutyryloxy] succinimide; l'ester N-[y-maléimidobutyryloxy] sulfosuccinimide; le succinimidyl 6-((β-maléimido propionamido)hexanoate); le succinimidyl 4-(N-maléimido méthyl)cyclohexane-1-carboxy-(6-amidocaproate); l'ester N-κ-maléimido undécanoyl-oxysulfo succinimide et les réticulants succinimidyles pégylés maléimidos, par exemple, le SMCC pégylé, selon lequel la chaîne de polyéthylène glycol peut présenter une longueur de 2 à 24 unités de glycol.

8. Procédé selon l'une quelconque des revendications précédentes, selon lequel l'électrode est une électrode sérigraphiée ou une électrode à couche épaisse.

9. Procédé selon la revendication 8, selon lequel l'électrode est une électrode en carbone.

10. Procédé selon la revendication 8, selon lequel l'électrode est une électrode en or, platine, aluminium, titane, nickel ou acier inox.

11. Conjugué de réactif d'affinité pour la fabrication d'un capteur électrochimique comprenant un conjugué formé par la réaction d'un réactif d'affinité avec un produit de réaction d'un phénol alkylaminé avec un agent de réticulation selon lequel le phénol alkylaminé et l'agent de réticulation se présentent selon l'une quelconque des revendications précédentes.

12. Procédé de fabrication d'un biocapteur électrochimique comprenant les étapes consécutives de:
fourniture d'un conjugué de réactif d'affinité selon la revendication 11;
fourniture d'une électrode; et
électropolymérisation du conjugué de réactif d'affinité sur la surface de l'électrode.
